# EUROPÄISCHE PATENTSCHRIFT

(11) **EP 1 832 408 B1**
(45) Veröffentlichungstag und Bekanntmachung des Hinweises auf die Patenterteilung: **22.09.2010**
(21) Anmeldenummer: 07004213.0
(22) Anmeldetag: 01.03.2007
(51) Int. Cl.: B29C 51/38, B26D 5/18, B26F 1/40, B30B 1/14, F16H 21/44

(54) **Thermoformverfahren und Thermoformmaschine mit Kniehebelsystem**
Thermoforming method and thermoforming machine with toggle mechanism
Procédé et Machine de thermoformage avec mécanisme à genouillère

(30) Priorität: 08.03.2006 DE 102006011039; 27.04.2006 DE 102006019532
(43) Veröffentlichungstag der Anmeldung: 12.09.2007
(73) Patentinhaber: Gabler Thermoform GmbH & Co. KG, 23568 Lübeck (DE)
(72) Erfinder: Schröder, Jens, 23617 Stockelsdorf (DE)
(74) Vertreter: Grosse, Wolf-Dietrich Rüdiger

(56) Entgegenhaltungen:
- EP-A1- 0 383 935
- AT-B- 414 224
- CH-A- 399 724
- US-B1- 6 200 122

## Beschreibung

Die Erfindung betrifft eine Thermoformmaschine und ein Verfahren zum Betreiben einer Thermoformmaschine zum Formen und Stanzen von Artikeln aus einer thermoplastischen Kunststofffolie, die ein mindestens zweiteiliges Werkzeug aufweist, von denen mindestens eines der jeweils von einem Werkzeugtisch getragenen Werkzeuge in eine Öffnungs- und Schließrichtung mittels eines Bewegungselements verstellbar ist, wobei das Bewegungselement aus zwei zu einer Mittenebene zumindest eines Teils der Thermoformmaschine spiegelbildlich angeordneten Kniehebelsystemen besteht.

Mit solchen Thermoformmaschinen werden zwischen den relativ zueinander beweglichen Teilen eines Werkzeugs Kunststoffartikel (beispielsweise Margarineschalen, Trinkbecher, Behälterdeckel) aus thermoplastischen Kunststofffolien und Verbundfolien produziert. Dabei werden in der geschlossenen Stellung des aus Ober- und Unter-Werkzeug bestehenden Werkzeugs die Artikel geformt, indem die erwärmte Folie mit Druckluft oder Vakuum in die Werkzeugkavität gedrückt wird, dann gestanzt und anschließend bei geöffneter Stellung des Werkzeugs aus diesem heraus und in eine nachgeschaltete Stapel- und Zählvorrichtung gefördert wird. Das Oberwerkzeug ist ebenso wie das Unterwerkzeug an je einen höhenbeweglichen Tisch befestigt, so daß beide Werkzeugteile verstellbar sind.

Eine Thermoformmaschine der gattungsgemäßen Art ist aus der CH 399 724 bekannt. Damit das Werkzeug periodisch geschlossen und wieder geöffnet werden kann, und zwar unabhängig davon, ob ein reines Formen, d.h. ohne Ausstanzen oder kombiniertes Formen und Ausstanzen der Artikel erfolgen soll oder in einer Maschinenstation lediglich ein Ausstanzen des bereits geformten Artikels aus der Kunststofffolie durchgeführt werden soll, sind dort einander spiegelbildlich gegenüberliegend zwei Kniehebelsysteme vorgesehen. Diese werden von jeweils einem seitlich angeordneten, verschwenkbar gelagerten Pneumatikzylinder beaufschlagt, der mit seiner Kolbenstange mittig an die Kniehebel des Kniehebelpaares angreift. Die Kniehebel sind im Bereich der Maschinenmitte angeordnet und oben pendelnd an einem Festlager sowie unten am Formträger an einem Lagerbolzen angelenkt. Das damit bekannt gewordene Antriebssystem erlaubt nur niedrige Taktzahlen und ist nicht geeignet, insbesondere beim Stanzen auftretende hohe Seitenkräfte aufzunehmen.

Aus der DE 36 04 255 A1 ist es bekannt, das Bewegungselement zum Öffnen und Schließen des Werkzeugs durch ein Spindelsystem zu realisieren, wobei zumeist eine Kugelrollspindel zum Einsatz kommt. Die Spindel wird von einem Antriebsmotor angetrieben. Ein Ende der Spindel ist an einem Kniehebelmechanismus angeordnet, so dass durch axiale Verschiebung der Spindel ein Bewegen des Kniehebelmechanismus und damit ein Öffnen und Schließen des Werkzeugs erfolgen kann. Das Werkzeugteil, das am Kniehebelmechanismus angelenkt ist, kann hierdurch in seine benötigten Positionen verfahren werden. Die Spindeln sind zumeist als Kugelrollspindeln oder Planetenrollspindeln ausgeführt, was den Nachteil mit sich bringt, dass die maximale Betriebsdrehzahl der Spindel begrenzt ist. Das Öffnen und Schließen des Werkzeugs ist nur mit einer gewissen maximalen Grenzgeschwindigkeit möglich, was wiederum die Taktzahl der Thermoformmaschine und damit den Ausstoß gefertigter Artikel begrenzt.

Ein anderer Nachteil besteht darin, dass sich die Rollenspindelantriebe wegen der notwendigen zentralen Krafteinleitung in der Mitte des Werkzeugs bzw. Werkzeugtisches befinden müssen. Dort muss jedoch bei einigen Typen von Thermoformmaschinen der sog. Vorstrecker angeordnet werden, der eine mechanische Vorausformung der erwärmten Kunststofffolie vornimmt. Der Vorstrecker wird besonders für hohe Artikel benötigt. Ist der Vorstrecker nicht - was aufwändig ist - im Werkzeug integriert, muss er mittig bzw. zentral in der Thermoformmaschine positioniert werden, so dass hier entsprechender Platz zur Verfügung stehen muss. Der Vorstrecker muss dabei in der Regel eine von der Bewegung des Werkzeugtisches unabhängige Bewegung ausführen können.

Bei den bekannten Antrieben, sei es z.B. mit den beschriebenen Pneumatikzylindern oder Rollenspindeln, liegt ein weiterer, wesentlicher Nachteil vor. Dieser besteht in der unvermeidlichen Umkehr der Bewegungen nach Beendigung des Stanzvorgangs, was immer mit einem Stopp des Antriebssystems einhergeht. Es sind beim Thermoformen nämlich drei Arbeitswege der Formtische mit ihren Form- und Werkzeughälften unabdingbar. Die Werkzeughälfte fährt von der unteren Position auf die Folie zu und taucht dabei bis auf einen Restweg von wenigen zehntel Millimetern in die Folie ein, um diese druckdicht abzudichten. Hier hält das Antriebssystem das erste mal an. Die Formzeit für das Produkt läuft an, bis die Artikel ausgekühlt sind. Danach startet erneut der Antrieb, um die Artikel auszustanzen. Der Weg des Tisches mit dem Werkzeug beträgt nur wenige zehntel Millimeter, wobei die Drehrichtung des Antriebes oder der Verfahrweg der Zylinder gleich ist. Die Folie wird nun durchgestanzt, wonach ein zweiter Stopp erforderlich ist, weil die Bewegung der Antriebe umgekehrt werden muß, damit diese wieder in ihre Ausgangsposition gelangen, wo sich zur Einleitung eines neuen Arbeitszyklusses ein dritter Stopp anschließt. Dabei treten erhebliche Zeitverluste auf durch Verzögerungs- und Beschleunigungsrampen, was durch das Hochlaufen der Motoren zwangsweise abläuft, oder durch Umsteuern der Druckluft auf die andere Kolbenfläche in den Zylindern.

Eine andere Ausgestaltung des Bewegungselements für ein Werkzeugteil sieht vor, dass ein Servomotor über eine Getriebeanordnung ein Kniehebelsystem betätigt, das die Werkzeugtische ebenfalls in die erforderliche Position bewegt. Die beiden gleichgerichteten Kniehebelsysteme werden von einem Pleuel gleichsinnig und simultan bewegt.

Dieses Kniehebelsystem hat den Nachteil, dass mit einem einzigen Antrieb beide gleichgerichteten Kniehebelpaare in eine Richtung senkrecht zur Öffnungs- und Schließbewegung des Werkzeugteils verfahren werden müssen. Dies erzeugt Massenkräfte, die senkrecht zur Öffnungs- und Schließbewegung der Maschine wirken, was ein Kippen der gesamten Form- bzw. Stanzstation nach sich zieht. Die Führungssäulen der Werkzeugteile sind nicht in der Lage, diese Kräfte und Verformungen störungsfrei aufzunehmen. Die negative Folge ist nicht nur ein höherer Verschleiß auf die Führungssäulen und Buchsen, sondern auch die Standzeiten der Bandstähle zum Ausschneiden der Artikel sind erheblich geringer. Beim Arbeiten mit Bandstählen ist die Parallelität der beiden Werkzeughälften von großer Wichtigkeit, was durch die hohen seitlichen Massenkräfte beeinträchtigt wird. Daher sind Thermoformmaschinen dieser Art nur mit einer begrenzten Taktfrequenz betreibbar. Ein weiterer Nachteil dieser Bauform ist, dass für besonders unterschiedliche Öffnungs- und Schließhübe ein Umbau der Maschine erfolgen muss.

Daher liegt der Erfindung die Aufgabe zugrunde, eine Thermoformmaschine der eingangs genannten Art ohne diese Nachteile zu schaffen, die eine hohe Taktfrequenz ermöglicht, ohne störende Seitenkräfte infolge der Kniehebel-Massenkräfte arbeitet und die schließlich hinreichenden Platz für die Anordnung eines Vorstreckers lässt, sowie ein Verfahren zum Betreiben einer solchen Thermoformmaschine vorzuschlagen.

Diese Aufgabe wird erfindungsgemäß dadurch gelöst, daß die Kniehebelsysteme jeweils von einem Antriebsmotor über mindestens eine Kurbel bewegbar sind, die Antriebsmotoren in jeder Bewegungsphase gegensinnig zueinander angetrieben und samt der Kurbeln an der von der Mittenebene abgewandten Seite des Kniehebelsystems so angeordnet sind, daß sich im Bereich der Mittenebene ein von Bewegungselementen freier Bereich ergibt.

Mit der erfindungsgemäßen Merkmalskombination lassen sich mehrere Vorteile gleichzeitig erreichen. Durch die gegensinnig angetriebenen Motoren der symmetrisch bzw. spiegelbildlich angeordneten Kniehebelsysteme ergibt sich, dass sich keine nachteiligen Seitenkräfte auswirken können bzw. sich Massenkräfte bei der Bewegung der Systeme, die quer zur Öffnungs- und Schließbewegung des Werkzeugs wirken, gegenseitig aufheben, was der Maschine zudem einen sehr ruhigen Lauf verleiht.

Da die Mitte der Getriebeabtriebswelle mit dem Anlenkpunkt der Kurbeln so vorgesehen ist, daß die Kurbel nur bei gestrecktem Kniehebelsystem, d. h. im oberen Totpunkt des unteren Werkzeugtisches und im unteren Totpunkt des oberen Werkzeugtisches, mittig zu dessen Kniehebeln verläuft, bringt der Antriebsmotor bei den höchsten auftretenden Kräften das günstigste Moment auf. Das ist dann der Fall, wenn die Folie gestanzt wird, was für den Antrieb die höchsten Kräfte und die größten Momente bedeutet. Daraus ergeben sich zwar unterschiedliche Drehwinkel des Kurbeltriebes für die einzelnen Bewegungen, was bei gleicher Drehgeschwindigkeit nachteilig sein würde, da dann unterschiedlich lange Bewegungsabläufe für das Tischöffnen und Schließen zustande kommen. Dem wird jedoch so begegnet, daß die Bewegungsabschnitte für Tisch öffnen oder schließen in viele (sinnvoll sind 360) Einzelabschnitte aufgeteilt werden, die mit einer entsprechenden Drehzahl für den Motor und einer Zeitsequenz versehen werden, um in Summe für den Gesamtabschnitt auf eine identische Gesamtzeit zu kommen. Dies ist insofern von Bedeutung, da der Bewegungsablauf für den Transport der Kunststofffolie von den Tischbewegungen gesteuert wird. Zeitlich unterschiedliche Tischbewegungen würden auch unterschiedlich langes Verweilen der Folie unter der Heizstrecke, die zur Erwärmung der Folie nötig ist, nach sich ziehen, was für die Artikelqualität von großem Nachteil wäre. Die Festlegung dieser zeitlichen Teilabschnitte dient außerdem dazu, die Antriebskomponenten wie Getriebe, Motor, Kupplungen und mechanischen Elemente nicht zu überlasten, gleichwohl aber an die zulässigen Grenzen der Elemente zu gehen, um eine maximale Taktzahl für die Maschine zu erhalten.

Als wesentlicher Unterschied zu den bekannten Antriebssystemen und demgegenüber großer Vorteil lässt sich aufgrund der erfindungsgemäßen Maßnahmen das Antriebssystem mit nur noch zwei Stopppositionen verwirklichen. Der Stopp vor der Formzeit zum Abkühlen des Produkts muß ebenfalls eingehalten werden. Dies aber so, daß er entsprechend der Dicke bzw. Restdicke (ca. 0,3 mm) nach dem Anstanzen der Folie nur kurz vor dem oberen Totpunkt des Kurbeltriebes erfolgt. Nachdem der Kühlprozess im Werkzeug beendet ist, wird der Antrieb wieder gestartet, fährt unter gleichzeitiger Ausstanzung es Artikels durch seinen oberen Totpunkt und dann ohne Umkehrbewegung in der gleichen Drehrichtung der Antriebe weiter, so daß das Werkzeug geöffnet wird. Erst dann wird zu einem neuen Arbeitszyklus ein zweiter Stopp erforderlich mit Drehrichtungswechsel der Antriebe, die aber auch dann wiederum gegensinnig laufen.

Schließlich wird erreicht, dass sich die Antriebsmotore - ggf. samt zugehöriger Getriebe - seitlich an der Thermoformmaschine anordnen lassen und der Mittenbereich der Maschine völlig frei von Antriebsmitteln für die Werkzeugbewegung gehalten werden kann. Hierdurch ist es möglich, mechanische Vorstrecker im Mittenbereich anzuordnen, wo diese benötigt werden; für diese ist genügend Platz vorhanden.

Sowohl ein unterer Werkzeugtisch als auch ein oberer Werkzeugtisch kann mit je einem Bewegungselement versehen sein.

Jedes Kniehebelsystem kann aus zwei im Abstand zueinander angeordneten Kniehebeln bestehen, wobei jeder Kniehebel von einer Kurbel bewegt wird. Hierdurch wird die parallele Führung des Werkzeugteils in zwei zueinander senkrechten Richtungen quer zur Öffnungs- und Schließrichtung des Werkzeugs sichergestellt. Es kommen dann also insgesamt vier Kniehebelpaare zum Einsatz, die eine optimale Führung des Werkzeugteils sicherstellen.

Der Antriebsmotor ist bevorzugt zusammen mit einem Getriebe und der Lagerung für die mindestens eine Kurbel in oder an einem Gehäuse angeordnet.

Die erfindungsgemäße Thermoformmaschine kann auch nur ein Teil einer Anzahl Stationen sein, die bei der Herstellung thermogeformter Artikel zum Einsatz kommen. Daher ist nach einer Ausgestaltung vorgesehen, dass das Bewegungselement zum kombinierten Formen von Artikeln aus der thermoplastischen Kunststofffolie und Ausstanzen der Artikel aus der thermoplastischen Kunststofffolie ausgelegt ist. Alternativ kann aber auch vorgesehen werden, dass das Bewegungselement zum ausschließlichen Ausstanzen der aus der thermoplastischen Kunststofffolie geformten Artikel aus derselben ausgebildet ist. Auch das Einbringen von Löchern in die Artikel wird mit einer zusätzlichen Lochstanzstation dieser Art realisiert.

Um eine synchrone Bewegung der spiegelbildlich angeordneten Kniehebelsysteme sicherzustellen, sieht eine Fortbildung vor, dass die Bewegung, insbesondere der Drehwinkel, der beiden spiegelsymmetrisch angeordneten Antriebsmotoren gekoppelt ist. Die bewegungsabhängige Koppelung erfolgt dabei bevorzugt durch elektronische Mittel.

Als Antriebsmotoren kommen vor allem Servomotoren oder Drehstrommotoren zum Einsatz, aber insbesondere auch Torquemotore, die ohne Getriebe auf den Exzenter wirken.

Mit der Erfindung wird erreicht, dass eine hohe Taktzahl der Thermoformmaschine möglich ist. Dabei können bis zu 85 Zyklen pro Minute und mehr erzielt werden, was eine Erhöhung um etwa 40% gegenüber herkömmlichen Antriebsanordnungen bedeutet.

Weiterhin ist das Antriebssystem absolut frei von Querkräften, d. h. Massenkräften, die quer zur Öffnungs- und Schließbewegungsrichtung des Werkzeugs liegen. Seitlich gerichtete Massenkräfte heben sich im gesamten System auf, so dass die Maschine einen festen Stand behält.

Schließlich bleibt auch der Mittenbereich der Thermoformmaschine frei, so dass hier problemlos ein Vorstrecker untergebracht werden kann, ohne in Kollisionen mit dem Bewegungselement zu kommen. Der im Oberwerkzeug, d. h. dort, wo die Vorstrecker angeordnet sind, benötigte Raum bleibt frei.

Durch zwei separate Antriebe bzw. Antriebsmotoren ist es bei gegenläufiger Drehrichtung möglich, beide Seiten des Werkzeugteils parallel auf die gleiche Höhe zu verfahren.

In der Zeichnung ist ein Ausführungsbeispiel der Erfindung dargestellt. Es zeigen:
- Fig. 1: eine Thermoformmaschine in der Vorderansicht;
- Fig. 2: den unteren Teil der Thermoformmaschine nach Fig. 1 in perspektivischer Ansicht;
- Fig. 3: Kurvenverläufe für einige Systemparameter der Thermoformmaschine, aufgetragen über dem Drehweg der Kurbel des Bewegungselements; und
- Fig. 4: in der Vorderansicht Schemadarstellungen des unteren Teils der Thermoformmaschine mit Betriebspositionen des unteren Werkzeugtisches in den Totpunktstellungen bei zwei aufeinander folgenden Arbeitszyklen.

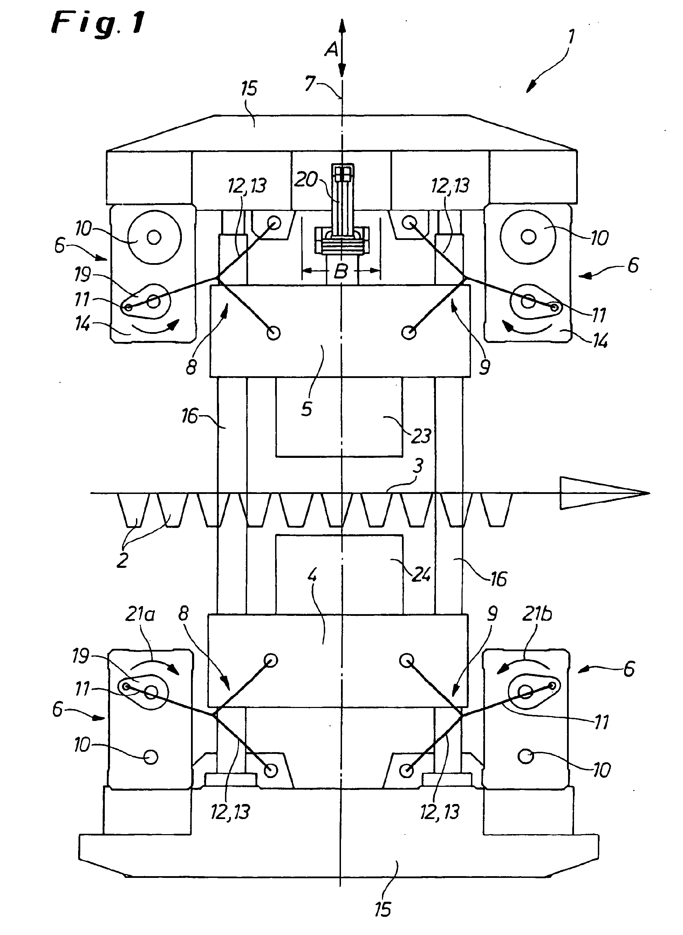

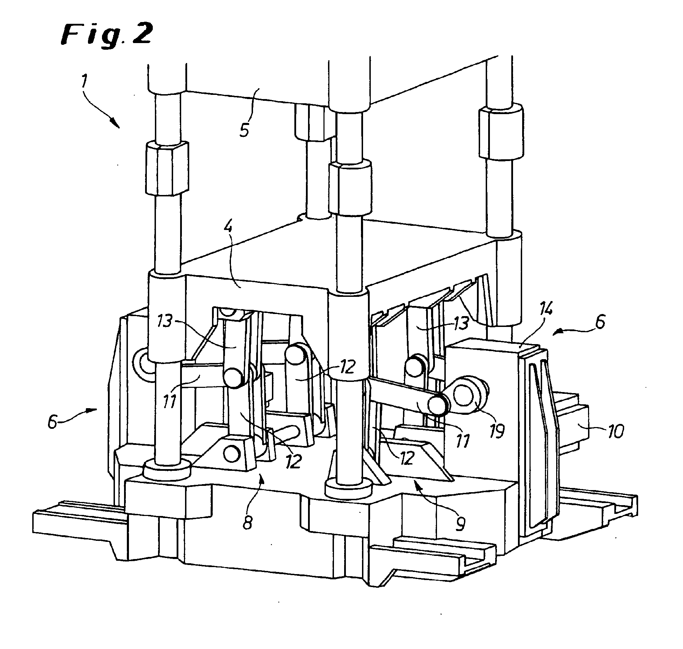

In Fig. 1 und Fig. 2 ist eine Thermoformmaschine 1 dargestellt, mit der Artikel 2 aus einer thermoplastischen Kunststofffolie 3 hergestellt werden. Die Folie 3 wird hierzu erwärmt und zwischen zwei geöffnete Werkzeugtische 4,5, die jeweils eine darauf befestigte Werkzeughälfte 23, 24 tragen, gebracht. Im Ausführungsbeispiel sind beide Werkzeugtische 4, 5 relativ zu einem Maschinenständer 15 beweglich angeordnet, d. h. beide Werkzeugtische 4, 5 bewegen sich zusammen mit ihren Werkzeughälften 23, 24 vertikal in eine Öffnungs- und Schließrichtung A auf Führungssäulen 16.

Zur Bewegung der Werkzeugtische 4, 5 sind Bewegungselemente 6 vorgesehen, die wie folgt ausgebildet sind:

Spiegelbildlich zur Mittenebene 7 der Thermoformmaschine 1 sind sowohl zur Bewegung des Untertischs 4 als auch des Obertischs 5 je zwei Kniehebelsysteme 8 und 9 vorgesehen. Jedes Kniehebelsystem 8, 9 besteht - wie aus Fig. 2 hervorgeht - aus zwei Kniehebeln 12 und 13 die hintereinander in Richtung normal auf die Zeichenebene der Fig. 1 angeordnet sind. Die Kniehebel 12, 13 bestehen im wesentlichen aus zwei gelenkig miteinander verbundenen Hebeln, die sowohl unten als auch oben am Maschinenständer 15 bzw. am Werkzeugtisch 4, 5 angelenkt sind. Zur Betätigung der Kniehebel 12, 13 hat jedes Kniehebelsystem 8, 9 eine eigene Kurbel 11, die an einem Exzenter 19 angelenkt ist; die Drehrichtungen sind in Fig. 1 durch Pfeile angegeben. Der Exzenter 19 ist in einem Getriebe 14 gelagert und wird von einem Antriebsmotor 10 angetrieben. Bei dem Antriebsmotor 10 handelt es sich bevorzugt um einen Servomotor, für den genaue Drehbewegungen vorgegeben werden können.

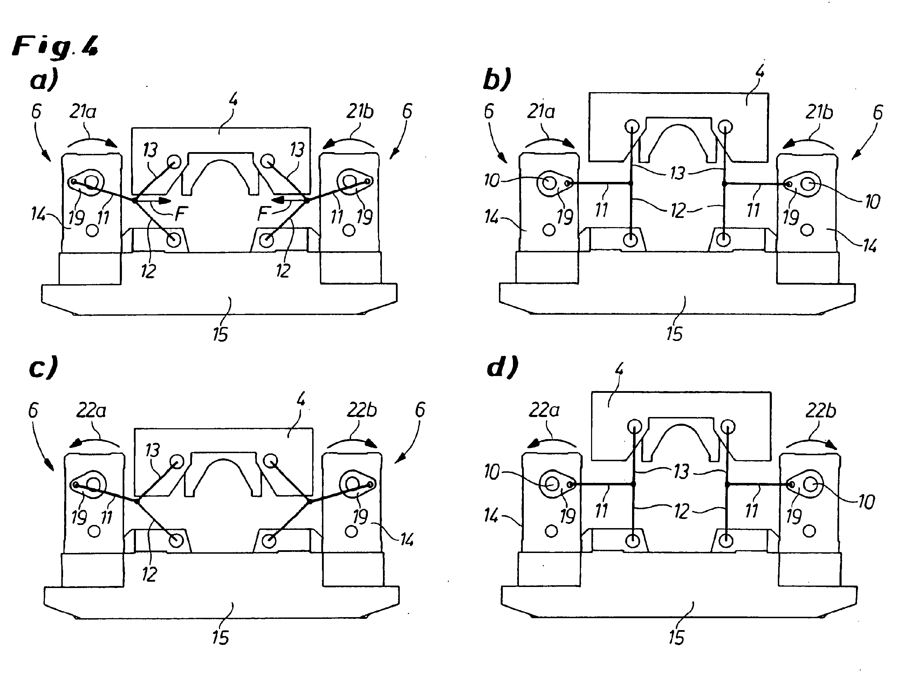

Die Antriebsmotoren 10 werden jeweils so angesteuert, dass die beiden spiegelbildlich angeordneten Motoren gegensinnig zueinander drehen, wie in den Figuren 1 und 4 durch die Drehrichtungspfeile 21 a, 21 b bzw. 22a, 22b angedeutet. Damit wird erreicht, dass Massenkräfte der Kniehebelsysteme 8, 9 sich in Richtung quer zur Öffnungs- und Schließrichtung A aufheben und somit keine hohe Belastungen auf die Führungssäulen 16 ausgeübt werden. Das System bestehend aus Antriebsmotor 10, gegebenenfalls zwischen Antriebsmotor 10 und Exzenter 19 angeordnetem Getriebe 14, Exzenter 19 und Kurbel 11 bildet einen Kurbeltrieb, der den Kniehebel 12, 13 betätigt.

Die Drehbewegung bzw. das Drehmoment für die Kniehebel 12, 13 kann entweder über zwei einzelne Servo- oder Drehstrommotoren mit nachgeschalteten Getrieben erzeugt werden oder über jeweils nur ein Getriebe mit zwei Ausgängen und einem mittig am Getriebe angebauten Antriebsmotor 10. Schließlich ist auch ein Torquemotor einsetzbar, wodurch auf das Getriebe zwischen Motor 10 und Exzenter 19 verzichtet werden kann.

Wie gesagt, sind die Drehrichtungen der Abtriebswellen bei den Einzelantrieben gegenläufig. Die Synchronisation der Drehbewegungen der beiderseits der Mittenebene 7 angeordneten Antriebsmotoren 10 kann dabei im so genannten "Master-Slave-Betrieb" erfolgen. Dabei wird über eine SPS-Maschinensteuerung und den an den Antriebsmotoren 10 befindlichen Inkremental- oder Absolutwertgebern der jeweils erforderliche Positionsabgleich beider Motoren 10 vorgenommen, was anhand der zur Verfügung stehenden elektronischen Mittel als solches vorbekannt ist (auch bekannt unter dem Begriff "elektronische Welle").

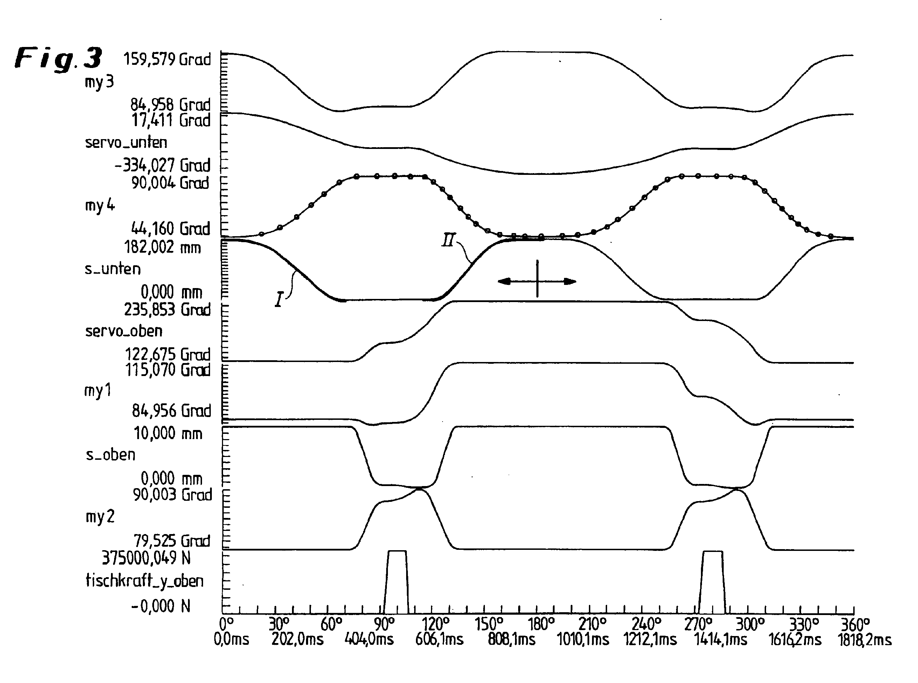

In Fig. 3 ist für einige Systemparameter der Thermoformmaschine der Kurvenverlauf über dem Drehweg bzw. der Zeit aufgezeigt. Auf den Abszissen verläuft der Drehwinkel des Exzenters 19 des Kurbeltriebs. Hinzuweisen ist vorliegend auf die Bewegung des unteren Werktischs 4, bezeichnet als "s-unten" und dargestellt mit der ausgezogenen Linie, wobei die dicker ausgezogene Linie I das Hochfahren des Werkzeugtischs 4, d.h. Schließen des Werkzeugs, um z.B. 202°, und die ebenfalls dicker ausgezogene Linie II das Herunterfahren des Werkzeugtischs 4, um z.B. 158°, zum Öffnen des Werkzeugs verdeutlichen soll. Die auf der Abszisse eingetragenen Gradangaben geben von 0 bis 180° den ersten Arbeitszyklus und von 180° bis 360° den zweiten Arbeitszyklus wieder.

Der Kurbeltrieb ist so ausgelegt, dass für jeden Arbeitszyklus die gleiche Drehrichtung beibehalten wird, wie durch Fig. 4 veranschaulicht, in der die Kniehebel 12, 13 der Kniehebelsysteme 8, 9 in jeweils den Ausgangspositionen vor der Drehbewegung dargestellt sind, und zwar gemäß a) sowie c) - jeweils bezogen auf die Position des unteren Werkzeugtischs 4 - im unteren Totpunkt und gemäß b) sowie d) im oberen Totpunkt. Der Bewegungsablauf bzw. Arbeitszyklus ist so, daß der untere Werkzeugtisch 4 seine Position gemäß a) im unteren Totpunkt eingenommen hat, in die er durch Herunterfahren um im Ausführungsbeispiel 158° mit gegensinniger (vgl. Pfeil 21a im Uhrzeigersinn und Pfeil 21b im Gegenuhrzeigersinn) Bewegung der beiden Kurbelantriebe gelangt ist, wobei das Schließen des Werkzeugs durch Hochfahren des unteren Werkzeugtischs 4 um 202° mit der gleichen gegensinnigen Bewegung erfolgt (vgl. b)).

Bevor der untere Werkzeugtisch 4 die obere Totpunktlage gemäß b) erreicht, ist für die benötigte Formzeit (Abkühlung) mit Anstanzung der Folie ein erster Stopp des Kurbelantriebs eingelegt worden. Diesem schließt sich dann aber lediglich noch ein zweiter Stopp an, nämlich wenn sich nach dem beendeten ersten Arbeitszyklus der untere Werkzeugtisch 4 wie anfangs gemäß a) wieder in der unteren Totpunktlage befindet, was c) wiedergibt. Es setzt dann der vorbeschriebene Folgezyklus bzw. ein zweiter Arbeitszyklus ein, mit gegenüber dem vorhergehenden, ersten Arbeitszyklus aber wechselnder, unverändert jedoch gegensinniger Drehrichtung (vgl. die Pfeile 22a bzw. 22b in c) und d)) der Kurbelantriebe. Dieses Wechselspiel wiederholt sich fortlaufend während des Betriebs der Thermoformmaschine. Zu erwähnen ist in diesem Zusammenhang, daß die Kurbeln 11 stets zum Zeitpunkt des Ausstanzens der Folie, d.h. dann, wenn die Kniehebel 12, 13 ihre in den oberen Totpunkt-Endlagen gemäß b) und d) gestreckte Position einnehmen, mittig zu den beiden Kniehebeln 12, 13 verlaufen, somit rechtwinklig zu diesen stehen. Die unvermeidlichen, hohen Seitenkräfte F, wie in a) durch Pfeil angedeutet, werden dadurch aufgehoben.

Es ist somit wichtig und festzuhalten, daß nach der beendeten Formzeit und dem erneuten Anfahren der Antriebsmotoren 10 zum Durchstanzen der Kunststofffolie 3 die Antriebe für das Werkzeugteil nicht erneut anhalten und mit Drehrichtungsänderung wieder zu ihrer Ausgangsposition zurückfahren. Vielmehr erreicht das jeweilige Werkzeugteil im oberen Totpunkt für den Untertisch 4 und im unteren Totpunkt für den Obertisch 5 seine Endposition, um mit gleicher Drehrichtung und hoher Drehzahl weiterzufahren. Nach dem Erreichen dieser Endlage, d. h. der weitesten entfernten Position von der Folie 3, wird der Antriebsmotor 10 zwecks Folientransport ohnehin angehalten. Wenn diese Bewegung abgeschlossen ist, drehen die Antriebsmotoren 10 ihre Drehrichtung um, um wiederum die Werkzeugtische 4, 5 auf die Folie 3 zu zu bewegen. Da die Kurbeltriebe für die stufenlos wählbaren Hübe der Werkzeugteile nicht um 360° drehend betrieben werden, sind die beiden Zyklen (s. mittig eingetragener Doppelpfeil in Fig. 3), die sich bei einer Drehrichtung ergeben, in ihrer Zeit unterschiedlich lang, sofern konstante Drehzahlen in den einzelnen Bewegungsabschnitten vorliegen. Hierdurch würde es zu unterschiedlich langen Verweilzeiten unter der Heizung für die Folie kommen, was wiederum keine gleich bleibende Qualität der tiefgezogenen Artikel nach sich zieht. Daher wird programmtechnisch die Drehzahl so angeglichen, dass die beiden nachfolgenden Drehbereiche in der gleichen Zeit ablaufen.

Die erläuterte Thermoformmaschine hat mindestens eine Station und maximal drei Stationen, wobei jeweils zwei bewegliche Tische vorgesehen sind, die die jeweiligen Werkzeughälften aufnehmen, wobei diese je nach Verformungsrichtung der Artikel den entsprechenden Werkzeugtischhub stufenlos fahren müssen. Der Verfahrweg der Werkzeugteile kann ohne Umbaumaßnahmen stufenlos eingestellt werden.

Im Mittenbereich der vorgeschlagenen Thermoformmaschine verbleibt ein freier Bereich B (s. Fig. 1), in dem problemlos der mechanische Vorstrecker bzw. Vorstreckerantrieb 20 im Oberwerkzeug 5 angeordnet werden kann.

Während bei vorbekannten Maschinen häufig eine maximale Taktzahl von nur 40 bis 70 Takte pro Minute erreichbar sind, sind mit dem vorgeschlagenen Konzept problemlos 85 Zyklen und mehr möglich.

### Bezugszeichenliste:

- 1: Thermoformmaschine
- 2: Artikel
- 3: thermoplastische Kunststofffolie
- 4: unterer Werkzeugtisch
- 5: oberer Werkzeugtisch
- 6: Bewegungselement
- 7: Mittenebene
- 8: Kniehebelsystem
- 9: Kniehebelsystem
- 10: Antriebsmotor
- 11: Kurbel
- 12: Kniehebel
- 13: Kniehebel
- 14: Gehäuse
- 15: Maschinenständer
- 16: Führungssäule
- 19: Exzenter
- 20: Vorstreckerantrieb
- 21a,b: Drehrichtungspfeile (gegensinnig)
- 22a,b: Drehrichtungspfeile (gegensinnig
- 23: zweite Werkzeughälfte (Oberwerkzeug)
- 24: erste Werkzeughälfte (Unterwerkzeug)

- A: Öffnungs- und Schließrichtung
- B: freier Bereich
- F: Seitenkraft
- I: Hochfahrlinie (der unteren Werkzeughälfte)
- II: Herunterfahrlinie (der unteren Werkzeughälfte)

## Patentansprüche

1. Thermoformmaschine (1) zum Formen und Stanzen von Artikeln (2) aus einer thermoplastischen Kunststofffolie (3), die ein mindestens zweiteiliges Werkzeug (23, 24) aufweist, von denen mindestens eines der jeweils von einem Werkzeugtisch (4, 5) getragenen Werkzeuge (23, 24) in eine Öffnungs- und Schließrichtung (A) mittels eines Bewegungselements (6) verstellbar ist, wobei das Bewegungselement (6) aus zwei zu einer Mittenebene (7) zumindest eines Teils der Thermoformmaschine (1) spiegelbildlich angeordneten Kniehebelsystemen (8, 9) besteht,
**dadurch gekennzeichnet,**
**daß** die Kniehebelsysteme (8,9) jeweils von einem Antriebsmotor (10) über mindestens eine Kurbel (11) bewegbar sind, die Antriebsmotoren (10) in jeder Bewegungsphase gegensinnig zueinander angetrieben und samt der Kurbeln (11) an der von der Mittenebene (7) abgewandten Seite des Kniehebelsystems (8, 9) so angeordnet sind, daß sich im Bereich der Mittenebene (7) ein von Bewegungselementen (6) freier Bereich (B) ergibt.

2. Thermoformmaschine nach Anspruch 1,
**dadurch gekennzeichnet,**
**daß** die Kurbeln (11) einerseits an den Kniehebelsystemen (8, 9) und andererseits an Getrieben (14) der Antriebsmotoren (10) derart angelenkt sind, daß die Kurbeln (11) nur bei gestreckten Kniehebelsystemen (8, 9) mittig zu den Kniehebeln (12, 13) verlaufen.

3. Thermoformmaschine nach Anspruch 1 oder 2,
**dadurch gekennzeichnet,**
**dass** sowohl ein unterer Werkzeugtisch (4) als auch ein oberer Werkzeugtisch (5) mit einem Bewegungselement (6) versehen ist.

4. Thermoformmaschine nach einem der Ansprüche 1 bis 3,
**dadurch gekennzeichnet,**
**dass** jedes Kniehebelsystem (8, 9) aus zwei im Abstand zueinander angeordneten Kniehebeln (12, 13) besteht, wobei jeder Kniehebel (12, 13) mit einer Kurbel (11) verbunden ist

5. Thermoformmaschine nach einem der Ansprüche 1 bis 4,
**dadurch gekennzeichnet,**
**dass** der Antriebsmotor (10) zusammen mit dem Getriebe (14) und der Lagerung für die mindestens eine Kurbel (11) in oder an einem Gehäuse (14) angeordnet ist.

6. Thermoformmaschine nach einem der Ansprüche 1 bis 5,
**dadurch gekennzeichnet,**
**dass** die Bewegung der Drehwinkel der beiden Antriebsmotoren (10) gekoppelt ist.

7. Thermoformmaschine nach Anspruch 6,
**dadurch gekennzeichnet,**
**dass** die Koppelung der beiden Antriebsmotoren (10) durch elektronische Mittel erfolgt.

8. Thermoformmaschine nach einem der Ansprüche 1 bis 7,
**dadurch gekennzeichnet,**
**dass** die Antriebsmotoren (10) Servomotore, Torquemotore oder Drehstrommotore sind.

9. Verfahren zum Betreiben einer Thermoformmaschine (1) gemäß einem der Ansprüche 1 bis 8 zum Formen und Stanzen von Artikeln (2) aus einer thermoplastischen Kunststofffolie (3), die ein mindestens zweiteiliges Werkzeug (23, 24) aufweist, von denen mindestens eines der jeweils von einem Werkzeugtisch (4, 5) getragenen Werkzeuge (23, 24) in eine Öffnungs- und Schließrichtung (A) mittels eines Bewegungselements (8) verstellbar ist, wobei das Bewegungselement (6) aus zwei zu einer Mittenebene (7) zumindest eines Teils der Thermoformmaschine (1) spiegelbildlich angeordneten Kniehebelsystemen (8, 9) besteht,
wobei die Kniehebelsysteme (8, 9) beaufschlagende Kurbeltriebe (10, 11, 19) mit in den einzelnen Bewegungszyklen für das Öffnen und Schließen der Werkzeugtische (4, 5) unterschiedlich eingestellten Drehwinkeln betrieben werden, die Bewegungszyklen aber in Einzelabschnitte aufgeteilt werden und durch voneinander abweichende Drehzahlen in den Einzelabschnitten die Bewegungs-Gesamtzeit in Summe gleich bleibend gehalten wird.

## Claims

1. A thermoforming machine (1) for forming and punching articles (2) out of a thermoplastic plastic sheet (3) that features a tool (23, 24) with at least two parts, with at least one of the tools (23, 24) that are respectively carried by a tool table (4, 5) being adjustable into an opening and closing direction (A) by means of a motion element (6), and with the motion element (6) consisting of two toggle lever systems (8, 9) that are arranged in the form of a mirror image referred to a central plane (7) of at least a section of the thermoforming machine (1),
**characterized in**
**that** the toggle lever systems (8, 9) can be respectively moved by a driving motor (10) via at least one crank (11), wherein the driving motors (10) are driven opposite to one another during each phase of motion, and wherein the driving motors with the cranks (11) are arranged on the side of the toggle lever system (8, 9) that faces away from the central plane (7) in such a way that a region (B) free of motion elements (6) results in the region of the central plane (7).

2. The thermoforming machine according to Claim 1,
**characterized in**
**that** the cranks (11) are coupled to the toggle lever systems (8, 9) on one side and to gear mechanisms (14) of the driving motors (10) on the other side in such a way that the cranks (11) only extend centrally referred to the toggle levers (12, 13) when the toggle lever systems (8, 9) are stretched.

3. The thermoforming machine according to Claim 1 or 2,
**characterized in**
**that** a lower tool table (4), as well as an upper tool table (5), is provided with a motion element (6).

4. The thermoforming machine according to one of Claims 1 to 3,
**characterized in**
**that** each toggle lever system (8, 9) consists of two toggle levers (12, 13) that are spaced apart from one another, wherein each toggle lever (12, 13) is connected to a crank (11).

5. The thermoforming machine according to one of Claims 1 to 4,
**characterized in**
**that** the driving motor (10) is arranged in or on a housing (14) together with the gear mechanism (14) and the bearing arrangement for the at least one crank (11).

6. The thermoforming machine according to one of Claims 1 to 5,
**characterized in**
**that** the angles of rotation of both driving motors (10) are motionally coupled.

7. The thermoforming machine according to Claim 6,
**characterized in**
**that** the coupling of the two driving motors (10) is realized with electronic means.

8. The thermoforming machine according to one of Claims 1 to 7,
**characterized in**
**that** the driving motors (10) consist of servomotors, torque motors or three-phase A.C. motors.

9. A method for operating a thermoforming machine (1) according to one of Claims 1 to 8 for forming and punching articles (2) out of a thermoplastic plastic sheet (3), with said thermoforming machine featuring a tool (23, 24) with at least two parts, with at least one of the tools (23, 24) that are respectively carried by a tool table (4, 5) being adjustable into an opening and closing direction (A) by means of a motion element (8), and with the motion element (6) consisting of two toggle lever systems (8, 9) that are arranged in the form of a mirror image referred to a central plane (7) of at least a section of the thermoforming machine (1), wherein crank mechanisms (10, 11, 19) acting upon the toggle lever systems (8, 9) are operated with angles of rotation that are adjusted differently in the individual motion cycles for opening and closing the tool tables (4, 5), but the motion cycles are divided into individual segments and the overall motion time is in total maintained constant by means of rotational speeds that deviate from one another in the individual segments.

## Revendications

1. Machine de thermoformage (1) pour façonner et découper des articles (2) en un film thermoplastique (3), laquelle comporte un outil en au moins deux éléments (23, 24) dont au moins l'un des outils (23, 24) portés chacun par un plateau porte-outils (4, 5) est réglable dans une direction d'ouverture et de fermeture (A) au moyen d'un élément de déplacement (6), l'élément de déplacement (6) consistant dans deux systèmes de leviers à genouillère (8, 9) disposés en symétrie spéculaire par rapport à un plan central (7) d'au moins une partie de la machine de thermoformage (1),
**caractérisée en ce que**
les systèmes de leviers à genouillère (8,9) sont déplaçables chacun par un moteur d'entraînement (10) via une manivelle (11), **en ce que** dans chaque phase de déplacement, les moteurs d'entraînement (10) sont entraînés en sens mutuellement opposé et sont disposés avec les manivelles (11) sur le côté opposé au plan central (7) du système de leviers à genouillère (8, 9) de sorte à ce qu'il en résulte une zone libre (B) d'éléments de déplacement (6) dans la zone du plan central (7).

2. Machine de thermoformage selon la revendication 1,
**caractérisée en ce que**
les manivelles (11) sont articulées d'une part sur les systèmes de leviers à genouillère (8, 9) et d'autre part sur des transmissions (14) des moteurs d'entraînement (10) de sorte que les leviers (11) ne s'étendent au centre des leviers à genouillère (12, 13) que lorsque le système de leviers à genouillère (8, 9) est étiré.

3. Machine de thermoformage selon la revendication 1 ou 2,
**caractérisée en ce que**,
aussi bien un plateau porte-outils inférieur (4) qu'un plateau porte-outils supérieur (5) est muni d'un élément de déplacement (6).

4. Machine de thermoformage selon l'une quelconque des revendications 1 à 3, **caractérisée en ce que**
chaque système de leviers à genouillère (8, 9) consiste dans deux leviers à genouillère (12, 13) disposés à une distance mutuelle, chaque levier à genouillère (12, 13) étant relié à un levier (11).

5. Machine de thermoformage selon l'une quelconque des revendications 1 à 4, **caractérisée en ce que**
le moteur d'entraînement (10) est disposé, ensemble avec la transmission (14) et le logement pour au moins un levier (11) dans ou sur un carter (14).

6. Machine de thermoformage selon l'une quelconque des revendications 1 à 5, **caractérisée en ce que**
le déplacement des angles de rotation des deux moteurs d'entraînement (10) est accouplé.

7. Machine de thermoformage selon la revendication 6, **caractérisée en ce que**
l'accouplement des deux moteurs d'entraînement (10) s'effectue par des moyens électroniques.

8. Machine de thermoformage selon l'une quelconque des revendications 1 à 7, **caractérisée en ce que**
les moteurs d'entraînement (10) sont des servomoteurs, des moteurs Torque ou des moteurs triphasés.

9. Procédé de thermoformage pour faire fonctionner une machine de thermoformage (1) selon l'une quelconque des revendications 1 à 8, pour façonner et découper des articles (2) en un film thermoplastique (3), laquelle comporte un outil en au moins deux éléments (23, 24) dont au moins l'un des outils (23, 24) portés chacun par un plateau porte-outils (4, 5) est réglable dans une direction d'ouverture et de fermeture (A) au moyen d'un élément de déplacement (6), l'élément de déplacement (6) consistant dans deux systèmes de leviers à genouillère (8, 9) disposés en symétrie spéculaire par rapport à un plan central (7) d'au moins une partie de la machine de thermoformage (1),
les systèmes de leviers à genouillère (8, 9) étant actionnés par des commandes d'admission par bielle-manivelle (10, 11, 19) avec des angles de rotation réglés différemment dans les cycles de déplacement individuels pour l'ouverture et la fermeture des plateaux porte-outils (4, 5), les cycles de déplacement étant pourtant divisés en parties individuelles et par des vitesses de rotation différentes dans les parties individuelles, la totalité du déplacement étant maintenue constante en somme.
